**Europäisches Patentamt**

**European Patent Office**

**Office européen des brevets**

(19)

(11) Numéro de publication : **0 328 433 B1**

(12) # FASCICULE DE BREVET EUROPEEN

(45) Date de publication du fascicule du brevet :
**19.08.92 Bulletin 92/34**

(51) Int. Cl.⁵ : **F16J 15/34**

(21) Numéro de dépôt : **89400245.0**

(22) Date de dépôt : **27.01.89**

(54) **Dispositif d'étanchéité à frottement latéral.**

(30) Priorité : **03.02.88 FR 8801326**

(43) Date de publication de la demande :
**16.08.89 Bulletin 89/33**

(45) Mention de la délivrance du brevet :
**19.08.92 Bulletin 92/34**

(84) Etats contractants désignés :
**AT BE CH DE ES FR GB IT LI SE**

(56) Documents cités :
**US-A- 4 377 290**
**WORLD PUMPS, no. 10, octobre 1985, pages 303-305, Morden, Surrey, GB; "Process pump seal development"**

(73) Titulaire : **Gueytron, Jean Claude Rolland**
**38 Route d'Albert**
**F-80600 Doullens (FR)**

(72) Inventeur : **Gueytron, Jean Claude Rolland**
**38 Route d'Albert**
**F-80600 Doullens (FR)**

(74) Mandataire : **Tilliet, René Raymond Claude et al**
**Cabinet Lavoix 2, Place d'Estienne d'Orves**
**F-75441 Paris Cédex 09 (FR)**

EP 0 328 433 B1

Jouve, 18, rue Saint-Denis, 75001 PARIS

# Description

La présente invention concerne un dispositif, d'étanchéité à frottement latéral, ou garniture mécanique. Elle trouve tout particulièrement son application pour assurer l'étanchéité de la traversée, par un arbre rotatif, de la paroi d'un carter contenant un produit fluide nocif, coûteux, dangereux ou sous pression, chargé de graviers, de poudre ou de fibres plus ou moins longues, par exemple dans l'industrie du papier, des sucreries ou autres. La garniture est alors montée dans une paroi de part et d'autre de laquelle se trouvent des fluides à des pressions différentes.

De nombreux dispositifs de ce type sont actuellement utilisés. US-A-4 377 290 décrit par exemple un dispositif comportant d'une part, un collier fixé sur l'arbre et supportant une bague de frottement mobile et, d'autre part, un organe immobilisé par rapport au carter et portant une bague de frottement fixe par l'intermédiaire de moyens de pression axiaux qui appliquent cette bague contre la bague de frottement mobile, ces moyens de pression étant partiellement logés dans des chambres ménagées dans l'organe immobilisé par rapport au carter.

Le collier est fixé sur l'arbre à l'intérieur du carter et tourne avec cet arbre en entraînant la bague de frottement. Par contre, l'organe porté par le carter est fixé sur la face extérieure de ce dernier par l'intermédiaire d'une bride de fixation de façon à être immobilisé en rotation en même temps que la bague de frottement qu'il porte.

Or, dans la plupart des applications de ces dispositifs, par exemple lorsque l'on veut assurer l'étanchéité entre l'arbre d'une pompe et le corps de cette pompe, il n'est pas possible d'avoir un accès suffisant à la face extérieure du carter. Seule sa face interne, c'est-à-dire le côté pompe de l'arbre, est aisément accessible. Le carter doit donc être muni d'une paroi démontable pour la traversée de l'arbre afin de fournir une ouverture suffisante pour l'introduction des différents éléments du dispositif d'étanchéité. Le démontage de cette paroi et sa remise en place rendent longue et délicate l'installation et posent des problèmes lors des opérations de maintenance.

La présente invention a pour but de remédier à ces inconvénients en fournissant un dispositif d'étanchéité particulièrement facile à installer ou à démonter.

A cet effet, la présente invention a pour objet un dispositif d'étanchéité à frottement latéral destiné à assurer l'étanchéité entre un carter fixe et un arbre tournant le traversant, pour éviter toute fuite du fluide contenu dans le carter, ce dispositif comportant un collier fixé sur l'arbre et portant une première bague de frottement, mobile, et un organe solidaire en rotation du carter qui porte une seconde bague de frottement, fixe, par l'intermédiaire de moyens de pression axiaux qui appliquent cette bague de frottement fixe contre la bague de frottement mobile, ces moyens de pression étant partiellement logés dans des chambres ménagées dans l'organe solidaire en rotation du carter, caractérisé en ce qu'il est disposé à l'intérieur du carter, en ce que le carter présente un alésage de passage de l'arbre qui est étagé en se rétrécissant de l'intérieur vers l'extérieur, en ce que l'organe qui porte la bague fixe est un anneau dont le profil extérieur est également étagé et qui est logé dans l'alésage du carter de telle sorte qu'il est retenu axialement par la coopération des épaulements du carter et de l'anneau sous l'action de la pression du fluide contenu dans le carter, des moyens de blocage montés dans le carter l'immobilisant en rotation et en ce que les épaulements du carter et de l'anneau montés dans l'alésage ont des faces en regard coniques.

Selon un mode de réalisation, ce dispositif comporte au moins un organe de solidarisation en rotation du carter et de l'anneau qui est fixé dans l'un de ces organes et un prise avec l'autre.

L'anneau de support du la bague de frottement fixe et le collier de support de la bague de frottement mobile peuvent ainsi être montés autour de l'arbre à travers l'alésage du carter, sans démontage de ce dernier. Il est donc possible d'utiliser le dispositif d'étanchéité de l'invention en des emplacements où il n'était pas possible de monter les dispositifs de la technique antérieure.

Les avantages et caractéristiques de l'invention ressortiront d'ailleurs plus clairement de la description ci-dessous d'un mode de réalisation, donné à titre d'exemple non limitatif et représente aux dessins annexés. Sur ces dessins :

La figure 1 est une vue partielle en coupe longitudinale d'un mode préféré de réalisation du dispositif, ou garniture, d'étanchéité à frottement latéral de la présente invention.

La figure 2 est une vue partielle, en coupe longitudinale, à plus grande échelle, du collier portant la bague de frottement mobile.

La figure 3 est une vue partielle, en coupe, d'un joint à lèvres assurant la protection en amont du joint torique, côté fluide à isoler.

La figure 4 est une vue partielle en coupe d'une variante du joint de protection de la Fig. 3.

La figure 5 est une vue partielle, en coupe, d'une soupape de sécurité du dispositif de la Fig. 1.

La figure 6 est une vue partielle, en coupe, d'une variante de réalisation des moyens de pression axiaux de la bague de frottement fixe contre la bague de frottement mobile.

La figure 7 est une partie en coupe partie en vue extérieure de l'anneau de support de la bague de frottement fixe et des moyens de blocage angulaire de cet anneau.

Le dispositif d'étanchéité représenté est monté dans la paroi 1 d'un carter fixe (non représenté) qui est par exemple le carter d'une pompe, cette paroi

étant percée d'un alésage 2 qui permet le passage d'un arbre 3, par exemple un arbre de pompe. L'alésage 2 a un diamètre nettement supérieur à celui de l'arbre 3 et a une forme étagée se rétrécissant en direction de l'extérieur. En effet, comme représenté, l'alésage 2 comporte trois parties cylindriques successives ayant des diamètres progressivement décroissants, respectivement 2a, 2b et 2c, qui sont reliées entre elles par des épaulements 4a, 4b.

Autour de l'arbre 3 est monté un colier 6 qui porte une bague de frottement 7 bloquée dans une cavité de ce collier par l'intermédiaire d'un joint torique 8 et d'un coussinet élastique 9. Le collier 6 est appliqué contre l'arbre 3 par l'intermédiaire d'un joint torique 10 et d'une frette 12 serrée contre l'arbre 3 au moyen d'une série de vis de serrage radiale 14, de sorte que le collier est solidaire en rotation de l'arbre 3 et que la bague de frottement 7 est également mobile avec cet arbre.

Une seconde bague de frottement 16, dite fixe, est montée de manière à être solidaire en rotation du carter 1 et est appliquée contre la bague de frottement mobile 7. La bague de frottement 16 est en effet montée, par l'intermédiaire de moyens de pression axiaux, dans un anneau 18 immobilisé en rotation par rapport au carter 1. L'anneau 18 qui est coaxial à l'arbre 3 a une surface extérieure étagée comportant deux parties cylindriques de diamètres différents 20 et 21 reliées entre elles par un épaulement 22. Les deux parties cylindriques ont des diamètres légèrement inférieurs à ceux des portions 2c et 2b de plus petit diamètre de l'alésage 2, tandis que l'épaulement 22 correspond à l'épaulement 4b de ce même alésage. De préférence, comme représenté, l'épaulement 4b et l'épaulement 22 sont inclinés et ont une forme tronconique de sorte qu'ils entrent en contact étroit lorsque l'anneau 18 est introduit dans l'alésage 2 et forment des butées de retenue axiale de cet anneau.

Une ou plusieurs vis radiales 24 traversant la paroi de l'alésage 2 sont serrées contre la surface extérieure cylindrique 20 de plus petit diamètre de l'anneau 18, et immobilisent en rotation cet anneau par rapport au carter 1 de sorte que ces deux organes sont rendus étroitement solidaires par l'action combinée de cette ou ces vis, des deux épaulements et de la pression du fluide contenu à l'intérieur du carter.

A l'intérieur de l'anneau 18 est ménagée une chambre annulaire 26 qui communique avec le volume interne du carter et dans laquelle est montée une couronne 28 portant la bague de frottement 16. Cette couronne est repoussée vers l'extérieur de la chambre 26 par des ressorts de pression 30 logés dans des chambres longitudinales 32 ménagées dans l'anneau 18 et réparties sur la circonférence de celui-ci, de sorte que la bague de frottement fixe 16 est appliquée de manière régulière et efficace contre la bague de frottement mobile 7.

L'étanchéité entre la chambre interne 26 de l'anneau 18 et la couronne 28 est assurée par des joints toriques, respectivement intérieur 34 et extérieur 36, auxquels est associé un joint racleur 38 placé en amont du joint torique extérieur 36. Un joint torique 40 est également monté entre la face cylindrique de grand diamètre 21 de l'anneau 18 et la face interne cylindrique 2b de l'alésage 2 de façon à assurer l'étanchéité statique entre le carter 1 et l'anneau 18.

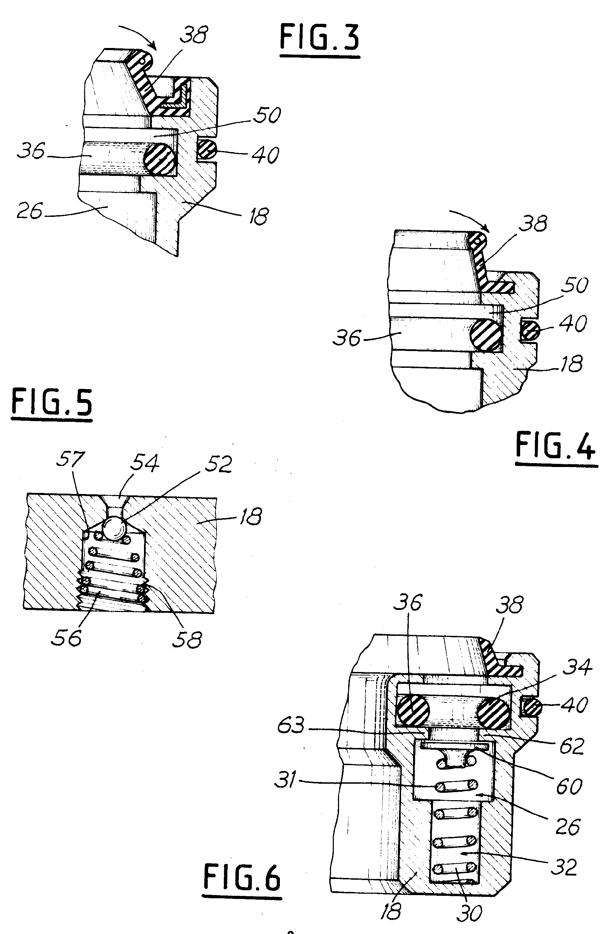

Les Fig. 3 et 4 montrent deux modes de réalisation du joint racleur 38 monté en amont du joint torique 36. Dans ces deux modes de réalisation, le joint 38 est constitué par un joint à lèvre qui est monté à l'entrée d'une gorge 50 contenant le joint torique 36 de façon à assurer la protection de cette gorge contre toutes souillures provenant du fluide à isoler. Ce joint, et tout particulièrement celui de la Fig. 4, peut être réalisé par moulage au profil convenable.

Cette façon de procéder protège le joint torique lui-même, mais aussi la gorge 50, ce qui permet de prévoir une gorge plus large que le joint torique. Il en résulte lors des mouvements de la couronne, un roulement sur lui-même du joint torique 36 qui n'offre qu'une résistance pratiquement nulle comparativement à celle due au glissement de la couronne dans un joint torique bloqué dans la gorge ou aux souillures provenant du fluide à isoler.

Chacun des ressorts 30 se prolonge hors de la chambre 32 correspondante dans la chambre périphérique 26 et appuie sur une rondelle 60 fixée à la couronne 28. De préférence, comme représenté sur la Fig.6, le ressort 30 s'appuie en précompression sur une rondelle 60 emboutie au profil convenable pour être guidée par la spire 31 la plus extérieure de ce ressort. La rondelle 60 est logée dans la chambre annulaire périphérique 26 et y est prisonnière dans le sens axial car elle est repoussée axialement par le ressort 30 contre deux épaulements 62, 63 qui bordent cette chambre. Ces épaulements laissent toutefois entre eux un espace suffisant pour permettre, avec un outil classique, en appuyant et inclinant la rondelle, de mettre cette dernière en place ou de la retirer facilement. Il en est de même du ressort 30 dont le diamètre est inférieur à l'écartement entre les deux épaulements 62 et 63.

De préférence, l'anneau 18 est muni dans sa partie extrême fermée, de faible diamètre, de moyens de communication contrôlée avec l'extérieur, permettant une compensation partielle de l'écart des pressions, qui sont constitués par deux orifices fermés par des soupapes, ou des clapets anti-retour, fonctionnant en sens inverse. Comme le montre la Fig.5, chacune de ces soupapes comporte une bille 52 coopérant avec un siège 54 et repoussée par un ressort hélicoïdal 56 monté dans un alésage 57 de la paroi de l'anneau 18. L'alésage 57 comporte, à son extrémité la plus éloignée de la bille 52, un filetage 58 dans lequel se visse au moins la dernière spire du ressort 54. Le ressort 54 ayant une forme conique, ce sont les spires de plus grand diamètre qui sont vissées dans le filetage 58. Grâce à cette disposition, le ressort peut facilement être démonté, ce qui permet éventuellement de remplacer la bille ou le ressort.

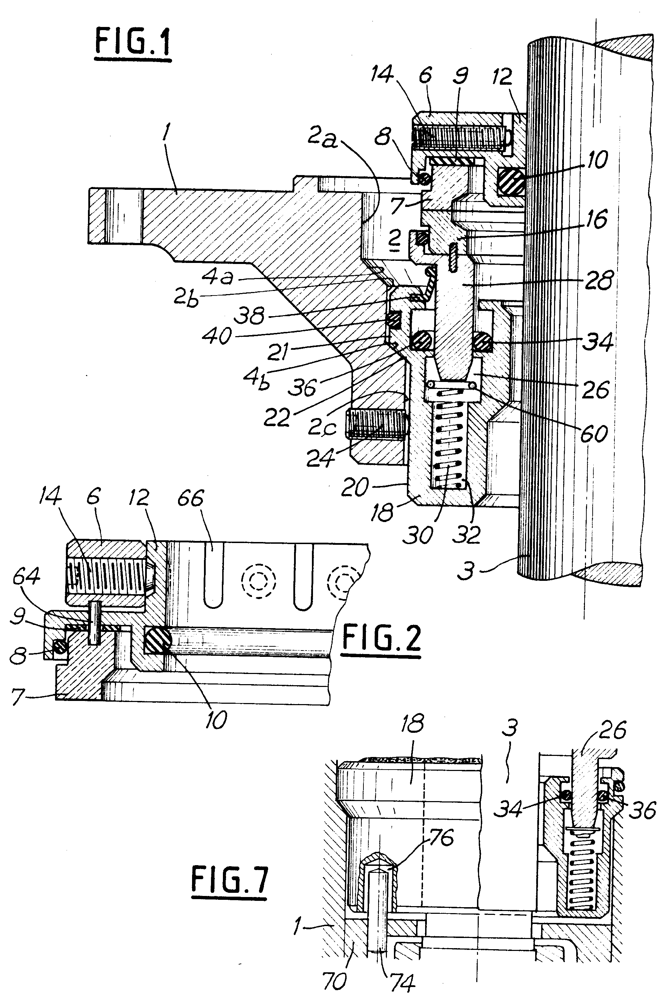

Par ailleurs, la frette 12 de fixation du collier 6 de support de la bague mobile 7 peut être d'une seule pièce avec ce collier 6 comme représenté sur la Fig.1, mais peut également être simplement reliée à ce dernier par exemple par une goupille 64. Cette goupille 64 est disposée axialement et fixée à l'une de ses extrémités dans le collier 6 tandis qu'elle traverse successivement la frette et la bague de frottement mobile 7 et assure ainsi un positionnement radial précis de ces organes. La frette comporte alors de préférence des découpes régulièrement réparties et une gorge circulaire. Le positionnement axial de la ou des vis de serrage radiale 14 du collier est alors assuré par la gorge circulaire, de façon que les vis 14 soient parfaitement centrées entre les découpes 66 de la frette. Il est ainsi possible d'obtenir un serrage énergique du collier sur l'arbre sans aucun marquage des vis sur cet arbre puisque seule la frette est en contact avec ce dernier.

Bien que dans le mode de réalisation représenté sur la Fig.1, l'alésage 2 comporte trois parties cylindriques 2a, 2b, 2c, il apparaîtra clairement que la partie interne, de plus grand diamètre, 2a peut avoir une autre forme. Elle peut par exemple être conique et s'évaser vers l'intérieur du carter.

De même selon une variante de réalisation représentée sur la Fig.7, le blocage angulaire de l'anneau 18 est obtenu au moyen de goupilles 74 fixées à une extrémité dans le carter 1 et logées à l'autre dans des trous 76 de l'anneau 18. De préférence les goupilles sont montées dans une paroi extrême 70 du carter qui ferme partiellement l'alésage 2 de sorte que les goupilles pénêtrent automatiquement dans leurs trous 76 lors de l'introduction axiale de l'anneau 18 dans l'alésage 2. Elles centrent l'anneau et l'immobilisent en rotation.

Quel que soit son mode de réalisation, la garniture mécanique d'étanchéité, objet de l'invention, peut être installée de manière très simple. En effet, l'anneau 18 seul ou déjà assemblé aux moyens de pression axiaux et à la bague de frottement fixe 16, est engagé l'intérieur de l'alésage 2 jusqu'à l'entrée en contact des épaulements 22 et 4b, par un simple déplacement axial, le blocage angulaire pouvant être obtenu simultanément. Le collier 6 portant la bague de frottement mobile 7 est ensuite monté sur l'arbre 3 et mis en contact avec la bague de frottement 16 depuis l'intérieur du carter 1. Il est donc possible d'effectuer des opérations d'assemblage et de démontage aussi souvent que cela est nécessaire, à la fois pour la mise en place du dispositif ou pour des opérations de maintenance, sans jamais démonter le fond du carter 1.

Les différents organes de la garniture et notamment les moyens de pression axiaux peuvent également être démontés et réassemblés sans difficulté aussi souvent que cela est utile.

**Revendications**

1. Dispositif d'étanchéité à frottement latéral destiné à assurer l'étanchéité entre un carter fixe (1) et un arbre tournant (3) le traversant, pour éviter toute fuite du fluide contenu dans le carter (1), ce dispositif comportant un collier (6) fixé sur l'arbre (3) et portant une première bague de frottement, mobile (7), et un organe (18) solidaire en rotation du carter (1) qui porte une seconde bague de frottement, fixe, (16) par l'intermédiaire de moyens de pression (30) axiaux qui appliquent cette bague de frottement fixe contre la bague de frottement mobile, caractérisé en ce que ces moyens de pression sont partiellement logés dans les chambres (32) ménagées dans l'organe solidaire en rotation du carter (18), en ce que le dispositif d'étanchéité est disposé à l'intérieur du carter (1), en ce que le carter (1) présente un alésage (2) de passage de l'arbre (3) qui est étagé en se rétrécissant de l'intérieur vers l'extérieur, en ce que l'organe (18) qui porte la bague fixe (16) est un anneau dont le profil extérieur est également étagé et qui est logé dans l'alésage (2) du carter de telle sorte qu'il est retenu axialement par la coopération des épaulements (22,4b) du carter et de l'anneau sous l'action de la pression du fluide contenu dans le carter (1), des moyens de blocage (24) montés dans le carter (1) l'immobilisant en rotation et en ce que les épaulements (22,4b) du carter (1) et de l'anneau (18) montés dans l'alésage (2) ont des faces en regard coniques.

2. Dispositif suivant la revendication 1, caractérisé en ce qu'il comporte au moins une vis de solidarisation en rotation du carter (1) et de l'anneau (18) qui est vissée dans l'un de ces organes et serrée contre l'autre.

3. Dispositif suivant la revendication 1, caractérisé en ce qu'il comporte au moins une goupille (74) de solidarisation en rotation du carter et de l'anneau (18) fixée dans l'un de ces organes et emboîtée dans l'autre.

4. Dispositif suivant la revendication 1 ou 2, dans lequel l'anneau de support de la bague de frottement fixe, monté dans l'alésage (2), est percé de deux orifices de communication avec l'extérieur munis de clapet à bille (52), caractérisé en ce que chaque clapet comporte un ressort hélicoïdal (56) de forme conique qui est vissé par sa spire la plus grande dans un filetage (58) pratiqué dans la paroi de l'orifice de l'anneau (18).

5. Dispositif suivant l'une des revendications précédentes, caractérisé en ce que les moyens de pression axiaux comprennent des ressorts (30) en appui chacun contre le fond de la chambre (32) qui les reçoit et contre une rondelle (60), en butée contre le bord d'une ouverture permettant son démontage et celui du ressort.

6. Dispositif suivant la revendication 5, caractérisé en ce que chaque ressort (30) est en précompression entre le fond de la chambre (32) et la rondelle (60).

7. Dispositif suivant l'une des revendications précédentes, caractérisé en ce que la bague de frottement (7) est fixée au collier (6) au moyen d'une goupille (64), dirigée axialement, qui positionne radialement ces deux organes.

**Patentansprüche**

1. Gleitringvorrichtung zur Abdichtung zwischen einem feststehenden Gehäuse (1) und einer dieses durchquerenden rotierenden Welle (3) zur Vermeidung des Austretens des in dem Gehäuse (1) enthaltenen Fluids, bestehend aus einer Schelle (6), die auf der Welle (3) befestigt ist und einen ersten beweglichen Gleitring (7) trägt, und aus einem bezüglich Drehung mit dem Gehäuse (1) fest verbundenen Organ (18), das einen zweiten, feststehenden Gleitring (16) über axiale Druckeinrichtungen (30) trägt, die den feststehenden Gleitring an den beweglichen Gleitring andrücken, dadurch gekennzeichnet, daß die Druckeinrichtungen teilweise in Kammern (32) sitzen, die in dem bezüglich Drehung mit dem Gehäuse fest verbundenen Organ (18) vorgesehen sind, daß die Gleitringdichtung im Inneren des Gehäuses (1) angeordnet ist, daß das Gehäuse (1) eine Bohrung (2) für den Durchgang der Welle (3) aufweist, die stufenförmig von innen nach außen kleiner wird, daß das den feststehenden Ring (16) tragende Organ (18) ein Ring ist, dessen Außenprofil ebenfalls abgestuft ist und der in die Bohrung (2) des Gehäuses so eingesetzt ist, daß er axial durch das Zusammenwirken der Schultern (22, 4b) des Gehäuses und des Rings unter der Einwirkung des Drucks des im Gehäuse (1) enthaltenen Fluids zurückgehalten ist, wobei in dem Gehäuse (1) montierte Blockiereinrichtungen (24) ihn bezüglich Drehung blockieren, und daß die Schultern (22, 4b) des Gehäuses (1) und des in der Bohrung (2) montierten Rings (18) einander gegenüberstehende konische Flächen besitzen.

2. Vorrichtung nach Anspruch 1, dadurch gekennzeichnet, daß sie wenigstens eine Schraube zur festen Verbindung des Gehäuses (1) und des Rings (18) bezüglich Drehung besitzt, die in eines dieser Organe eingeschraubt ist und an das andere angepreßt ist.

3. Vorrichtung nach Anspruch 1, dadurch gekennzeichnet, daß sie wenigstens einen Stift (74) zur festen Verbindung des Gehäuses und des Rings (18) bezüglich Drehung besitzt, der in einem dieser Organe befestigt und in das andere eingesteckt ist.

4. Vorrichtung nach Anspruch 1 oder 2, bei der der den feststehenden Gleitring tragende, in der Bohrung (2) montierte Ring mit zwei mit Kugelventilen (52) ausgerüsteten Öffnungen zur Verbindung mit außen versehen ist, dadurch gekennzeichnet, daß jedes Ventil eine Schraubenfeder (56) konischer Form aufweist, die mit ihrer größten Windung in ein in der Wand der Öffnung des Rings (18) vorgesehenes Gewinde (58) eingeschraubt ist.

5. Vorrichtung nach einem der vorhergehenden Ansprüche, dadurch gekennzeichnet, daß die axialen Druckeinrichtungen Federn (30) umfassen, die sich jeweils am Boden der sie aufnehmenden Kammer (32) und an einem Ring (60) abstützen, der am Rand einer Öffnung anliegt, die seine Montage und die der Feder gestattet.

6. Vorrichtung nach Anspruch 5, dadurch gekennzeichnet, daß jede Feder (30) zwischen dem Boden der Kammer (32) und dem Ring (60) vorkomprimiert ist.

7. Vorrichtung nach einem der vorhergehenden Ansprüche, dadurch gekennzeichnet, daß der Gleitring (7) an der Schelle (6) mit Hilfe eines axial gerichteten Stifts (64) befestigt ist, der diese beiden Organe radial positioniert.

**Claims**

1. A lateral friction sealing device intended to ensure the imperviousness between a fixed sump (1) and a rotating shaft (3) traversing it, in order to avoid any leaks of fluid contained in the sump (1), this device comprising a collar (6) fixed on the shaft (3) and carrying a first mobile friction-ring (7), and a rotating device (18) attached to the sump (1) which carries a second fixed friction-ring, (16) through the intermediary of axial pressure means (30) which apply this fixed friction-ring against the mobile frictionring, characterized in that these pressure means are partially housed in chambers (32) provided in the rotating device (18) attached to the sump, in that the sealing device is arranged inside the sump (1), in that the sump (1) has a bore (2) through which the shaft (3) passes which is stepped becoming narrower from the inside towards the outside, in that the device (18) which carries the fixed ring (16) is a collar whose outer profile is also stepped and which is housed in the bore (2) of the sump is of such a type that it is axially held by engagement with the shoulders (22, 4b) of the sump and the ring under the action of the pressure of the fluid contained in the sump (1), the means of locking (24) mounted in the sump (1) immobilizing its rotation and in that the shoulders (22, 4b) of the sump (1) and the collar (18) mounted in the bore (2) have opposing conical faces.

2. Device according to claim 1, characterized in that it contains at least one screw locking the rotation of the sump (1) and the collar (18) which is screwed into one of these devices and grips against the other.

3. Device according to claim 1, characterized in that it comprises at least one pin (74) locking the rotation of the sump and the collar (18) fixed in one of these devices and inserted in the other.

4. Device according to claim 1 or 2, in which the support ring of the fixed friction ring, mounted in the bore (2), has two holes cut in it communicating with the outside provided with a ball valve (52) characterized in that each valve comprises a helical spring (56) in a conical shape which is screwed by its largest turn in a thread (58) cut in the side wall of the opening of the collar (18).

5. Device according to one of the preceding claims, characterized in that the axial pressure means comprise springs (30) each pressing on the bottom of the chamber (32) which houses them and against a washer (60), butting against the edge of an opening which allows its removal and that of the spring.

6. Device according to claim 5, characterized in that each spring (30) is precompressed between the bottom of the chamber (32) and the washer (60).

7. Device according to one of the preceding claims, characterized in that the friction-ring (7) is fixed to the collar (6) by means of a pin (64), directed axially, which radially positions these two devices.

FIG.1

FIG.2

FIG.7

FIG.3

FIG.4

FIG.5

FIG.6